# EUROPEAN PATENT APPLICATION

(11) **EP 2 884 273 A1**
(43) Date of publication of application: **17.06.2015**
(21) Application number: 14197168.9
(22) Date of filing: 10.12.2014
(51) Int. Cl.: G01N 27/407

(54) **Thermal shock resistant coated exhaust sensor**

(30) Priority: 12.12.2013 US 201314104185
(71) Applicant: Delphi Technologies, Inc., Troy MI 48007 (US)
(72) Inventor: Day, Michael J., Metamora, MI Michigan 48455 (US); Kuisell, Richard C., Lapeer, MI Michigan 48446 (US); Symons, Walter T., Grand Blanc, MI Michigan 48439 (US); King, Charles S., Flint, MI Michigan 48506 (US); Clyde, Eric P., Metamora, MI Michigan 48455 (US)
(74) Representative: Delphi France SAS

(57) **Abstract**

A sensor element includes a substrate (10) having a coating (31) on a portion of the substrate (10). The coating (31) is applied to the substrate (10) by dipping the portion of the substrate (10) into a slurry which includes a pulverized mineral and water, extracting the substrate (10) from the slurry in a direction along an axis, drying the coated substrate (10), and firing the coated substrate (10) so as to promote densification of the mineral and adhesion of the mineral to the substrate (10). The coating (31) after firing has a minimum thickness of about 100 microns at every location around the periphery of a cross section through the substrate (10) taken in a plane normal to the axis. A method for making a coated sensor element is also disclosed.

## Description

### BACKGROUND OF THE INVENTION

Oxygen sensors located in exhaust systems of automobiles monitor the efficiency of the combustion reaction between gasoline and oxygen. When an engine operates at optimal efficiency, the ratio of gasoline and oxygen is such that each reactant is completely consumed. Such reactions are deemed to be at "stoichiometry." When there is less oxygen than the stoichiometric ratio, not all of the gasoline can be consumed in the combustion reaction resulting in increased pollution and unnecessary gasoline consumption. An engine operating under such conditions is said to be running "rich." On the other hand, when there is less gasoline than required by the stoichiometric ratio, the combustion reaction will produce more nitrogen-oxide pollutants. Under these conditions, an engine is said to be running "lean." By monitoring the oxygen content of the exhaust produced in the combustion reaction, oxygen sensors send a signal to the automobile's computer indicating whether the engine is running rich or lean. The computer then adjusts gasoline intake to the engine accordingly to achieve stoichiometry. This feedback is intended to maximize fuel efficiency and minimize pollutants.

Oxygen sensors need to be above a minimum operating temperature to produce a usable signal. To reach the desired operating temperature quickly when the engine is started, a heater located in the oxygen sensor is employed to raise the temperature of the sensor. However, a cold engine or cold exhaust system may contain droplets of liquid water from condensation. When the engine is started, water droplets entrained in the exhaust gas may impinge on the sensing element in the sensor. A droplet of liquid water hitting the heated sensing element results in rapid localized cooling of a portion of the sensing element, which induces localized stresses on the sensing element that may result in a thermal shock crack. To avoid this problem, activation of the heater may be delayed until the exhaust system has warmed sufficiently to evaporate any liquid water that may be present in exhaust gases. This is undesirable because it delays the time when closed-loop control of the emission control system may begin.

It would therefore be desirable to provide a protective coating for sensors that either eliminates or minimizes the disadvantages of the prior art. In particular, it would be advantageous to provide a protective coating for sensors which will protect the sensing element from thermal shock cracking while maintaining satisfactory function of the exhaust sensor.

### BRIEF SUMMARY OF THE INVENTION

In a first aspect of the invention, a sensor element includes a substrate having a coating on a portion of the substrate. The coating is applied to the substrate by dipping the portion of the substrate into a slurry which includes a pulverized mineral and water, extracting the substrate from the slurry in a direction along an axis, drying the coated substrate, and firing the coated substrate so as to promote densification of the mineral and adhesion of the mineral to the substrate. The coating after firing has a minimum thickness of about 100 microns at every location around the periphery of a cross section through the substrate taken in a plane normal to the axis.

The sensor element may maintain functionality and does not exhibit any thermal cracks after being heated to about 650 °C and contacted with 1 microliter of liquid water on the coated portion while at said temperature. The slurry may further comprise a volatile solid material, the volatile solid material being vaporized when the dried substrate is fired so as to result in controlled porosity in the coating. The volatile solid material may be selected from the group consisting of graphite, carbon black, starch, nylon, polystyrene, latex, other insoluble organics, and combinations of one or more of the foregoing materials. The slurry may further comprise a dispersant. The dispersant may comprise ammonium polymethacrylate. The pulverized mineral may comprise alumina. An outer surface of the substrate may include a porous protection layer that abuts an edge of a sensor protective layer, and wherein the coating may extend axially a sufficient amount so as to cover the edge where the porous protection layer abuts the sensor protective layer. The coating may extend axially a minimum of 1 mm. beyond the edge where the porous protection layer abuts the sensor protective layer.

In a second aspect of the invention, a method for making a coated sensor element is presented. The method includes dipping a portion of a fired sensor element into a slurry that comprises a pulverized mineral and water, extracting the sensor element from the slurry, and partially drying the dipped element. After allowing the slurry coated on the sensor element to partially dry, the element may be dipped into the slurry a second time, extracted from the slurry, and allowed to dry completely, leaving the pulverized mineral deposited on the sensor element. The element with the pulverized mineral deposited thereon is fired, using a time and temperature profile effective to sinter the pulverized mineral into a protective coating so as to provide good cohesion of the protective coating and good adhesion of the protective coating to the sensing element while avoiding cracking in the sensing element and the protective coating.

The slurry may further comprise a volatile solid material, the volatile solid material being vaporized when the coated sensor element is fired so as to result in controlled porosity in the coating. The volatile solid material may be selected from the group consisting of graphite, carbon black, starch, nylon, polystyrene, latex, other insoluble organics, and combinations of one or more of the foregoing fugitive materials. The slurry further may comprise a dispersant. The dispersant may comprise ammonium polymethacrylate. The pulverized mineral may comprise alumina. An outer surface of the sensor element may include a porous protection layer that abuts an edge of a sensor protective layer, and wherein the sensor element may be dipped into the slurry a sufficient amount such that the slurry covers the edge where the porous protection layer abuts the sensor protective layer. The slurry may extend axially a minimum of 1 mm. beyond the edge where the porous protection layer abuts the sensor protective layer. The method may further comprise after the extracting step and prior to the drying step, the steps of partially drying the dipped sensor element, dipping the partially dried sensor element into the slurry a second time, extracting the sensor element from the slurry after the second dipping step.

### BRIEF DESCRIPTION OF THE DRAWINGS

Fig. 1 is an exploded isometric view of an embodiment of a sensing element.
Fig. 2 is a side view of the sensing element of Fig. 1 with a protective coating of the invention.
Fig. 3 is a cross section view of the sensing element of Fig. 1 with a protective coating of the invention.
Fig. 4 is a graph of an exemplary firing profile for the protective coating of the invention.

### DETAILED DESCRIPTION OF THE PREFERRED EMBODIMENT

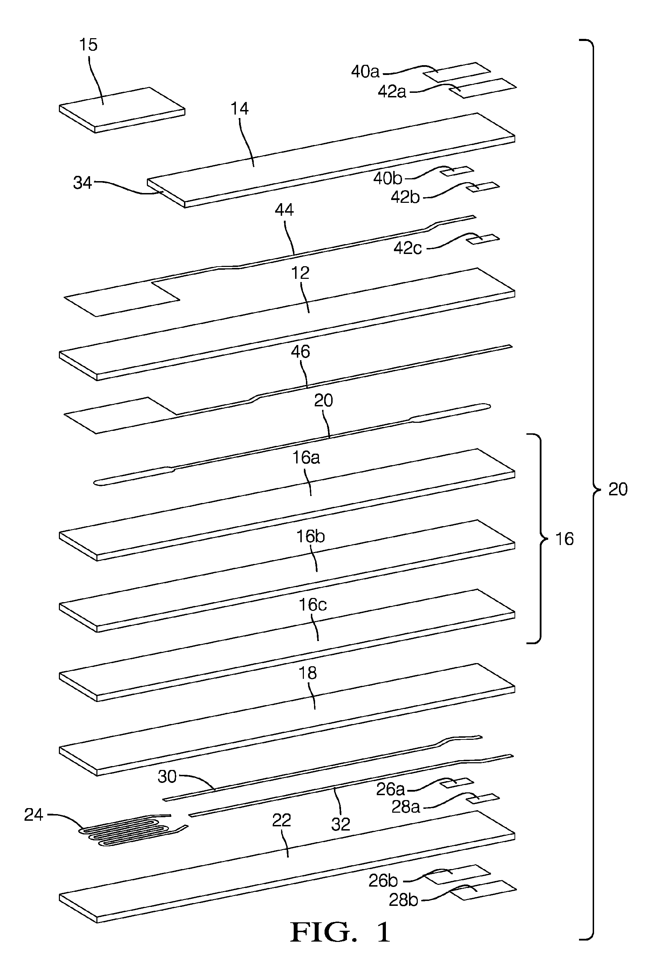

Referring now to FIG. 1, an exploded view is shown of non-limiting embodiment of an exhaust sensor 10. Exhaust sensor 10 may implement a temperature sensor, a heater, a lambda sensor, an oxygen sensor, or the like. Exhaust sensor 10 is formed from layers of green ceramics and metal inks that are layered and then fired together to form a unitary laminar structure.

A sensor layer 12 may be formed from zirconia. Sensor layer 12 may be sandwiched between a sensor protective layer 14 and a stack of support/insulating layers 16a-16c, which are collectively referred to as support/insulating layers 16. Sensor protective layer 14 and support/insulating layers 16 can be formed from alumina. A sacrificial material 20, such as carbon ink, can be applied to support/insulating layers 16 at the interface with sensor layer 12. Sacrificial material 20 volatilizes during firing and leaves a void air reference channel that is in communication with one side of sensor layer 12. A porous protection layer 15 allows exhaust gas to reach one side of sensor layer 12 while protecting sensor layer 12 from moisture and/or particulates. The porous protection layer 15 abuts an edge 34 of the sensor protective layer 14, and preferably has a thickness so that the top surface of the porous protection layer 15 is coplanar with the top surface of the sensor protective layer 14 after the sensor 10 is fired.

Exhaust sensor 10 also includes a heater that heats sensor layer 12. A separator layer 18 may be formed from alumina and positioned between support/insulating layers 16 and a heater protective layer 22. The heater is positioned between separator layer 18 and heater protective layer 22. The heater may be formed from a platinum heater serpentine 24. Platinum may also be employed to form pairs of pads 26a-26b and 28a-28b. Pads 26a-26b and 28a-28b provide a power connection to heater serpentine 24 via associated heater leads 30 and 32.

Platinum may also be employed to form pads 40a-40b and vias 42a-42c, which provide a connection to a signal voltage that is developed across sensor layer 12. Pads 40a-40b and 42a-42c communicate with electrode lead 44 and electrode lead 46, respectively. Electrode leads 44 and 46 may also be formed of platinum.

The electrical features of exhaust sensor 10, such as heater serpentine 24, heater leads 30 and 32, pads 26, 28, electrode leads 44 and 46, and pads 40 and 42, may be formed of platinum conductive ink. The zirconia, alumina, and porous layers are initially green, i.e. unfired, ceramic tapes. The electrical features are printed on the various layers. The multiple layers of tapes, at least some of which are printed, are then laminated together and fired at high temperatures to yield a fully dense multi-layer ceramic element. Firing of the laminated tapes may be performed at a peak temperature of approximately 1400 °C.

The metallized features, e.g. heater serpentine 24, electrode leads 44 and 46, and the various pads, can be designed either on the surface of, or embedded within, exhaust sensor 10. For embedded metallized features, vias are punched through the green ceramic. The vias are filled with the conductive ink and fired to make electrical connections with a circuit. Exhaust sensor 10 also includes contact pads that are formed on an exterior of exhaust sensor 10. The contact pads provide an external connection to the metallized features regardless of whether they are internal or external of exhaust sensor 10.

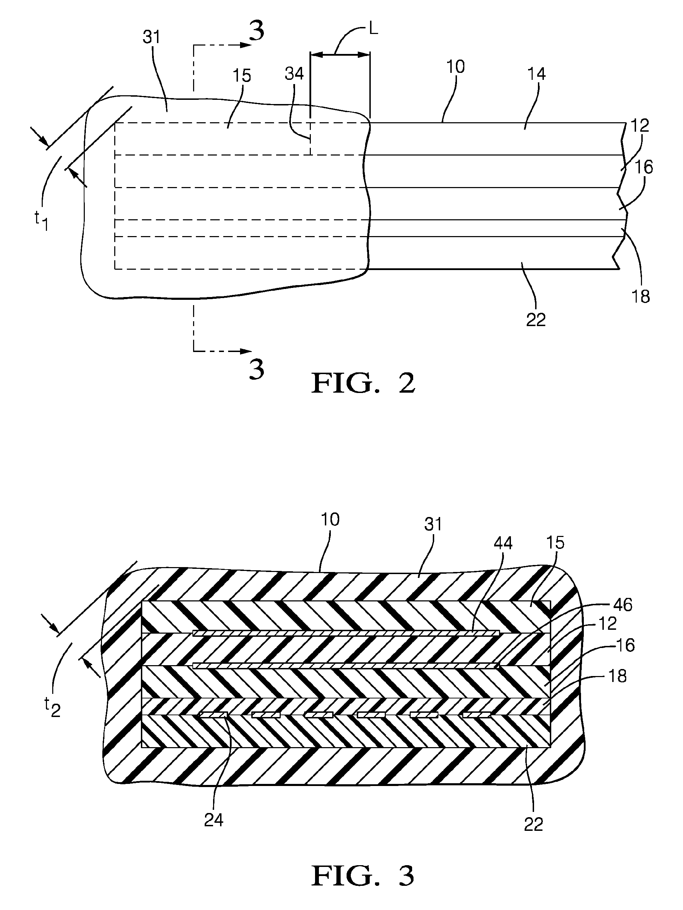

Following the formation and firing of the sensing element 10, a protective coating 31 as disclosed herein is applied to the sensing element 10, as shown in Figure 2. The protective coating 31 preferably is applied to the sensor 10 by dipping the sensor 10 into a slurry material so as to coat the end of the sensor that includes the porous protection layer 15, as shown in the side view of Fig. 2. For the portion of the sensor that receives the protective coating 31, the protective coating 31 surrounds the entire cross section of the sensor 10 as shown in Figure 3.

The slurry material comprises a pulverized mineral and water. In a preferred embodiment, the mineral comprises alumina. In an embodiment of the invention, the slurry additionally comprises a dispersant to alter the rheological behavior of the slurry in order to overcome the surface tension effects of the slurry-substrate interaction and promote desired coverage of the protective coating 31 on the sensor 10. An example of a useful dispersing agent may be Darvan® C, which is a product of Vanderbilt Minerals LLC identified as an ammonium polymethacrylate dispersing agent.

To allow for proper operation of the exhaust sensor 10, the protective coating 31 must have sufficient porosity to allow exhaust gas constituents to reach the porous protection layer 15. In an embodiment of the invention, the slurry material additionally comprises a volatile solid fugitive material, e.g. graphite, carbon black, starch, nylon, polystyrene, latex, other insoluble organics, as well as compositions comprising one or more of the foregoing fugitive materials. In the subsequent high temperature firing of the sensor element, the fugitive material is burned off leaving voids in the protective coating 31. The controlled porosity achieved by these voids allow exhaust gas to reach the porous protection layer 15.

In a non-limiting embodiment of the invention, the slurry may further include a pigment to promote error proofing by visual inspection of a sensing element 10. The pigment preferably does not interfere with the function of the sensing electrode 44. An example of a useful pigment material for error proofing is CoAl₂O₄.

In a method for applying the protective coating 31 to the substrate 10, the end of the sensing element 10 that includes the porous protection layer 15 is dipped into the slurry and extracted from the slurry, leaving a layer of the slurry material on the end of the sensing element 10. Deionized water may be used to modify the viscosity of the slurry material so as to achieve a desired coating thickness on the sensing element 10. In a preferred embodiment of the method, after extracting the sensing element 10 from the slurry, the slurry is allowed to partially dry on the sensing element. In a non-limiting embodiment of the method, the slurry is allowed to partially dry for approximately 120 seconds. Following the partial drying, the sensing element 10 is dipped into the slurry a second time and extracted from the slurry. This process that includes two dips with partial drying therebetween has been found to achieve desired coating thickness at the edges of the sensing element 10 without developing excessive coating thickness over the faces of the sensing element 10. Following the second dip of the sensing element 10 into the slurry, the coated sensing element 10 is dried in air prior to firing.

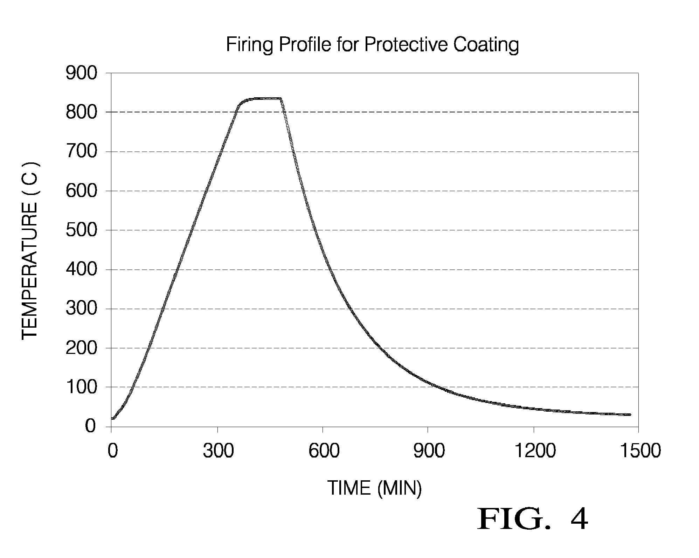

The time and temperature profile used for firing is selected to provide controlled and thorough burn out of the volatile solid fugitive material in the slurry to provide the desired porosity in the protective coating 31, while providing good cohesion of the protective coating 31 and good adhesion of the protective coating 31 to the sensing element 10 and avoiding cracking in the sensing element 10 and the protective coating 31. An exemplary firing profile is depicted in Fig. 4. As shown in Fig. 4, the firing temperature is ramped from ambient temperature to a peak temperature, held at the peak temperature for a period of time, and allowed to cool gradually to ambient temperature. In the example profile shown in Fig. 4, the maximum rate of change of temperature during the heating portion is approximately 2.6 °C/minute, the peak temperature is approximately 830 °C, the hold time at the peak temperature is approximately 100 minutes, and the maximum rate of change of temperature during the cooling portion of the profile is approximately -4 °C/minute.

It has been determined that a sensing element 10 coated with a protective coating 31 as described can exhibit resistance to cracking due to thermal shock while maintaining adequate performance for sensing constituents of exhaust gas. As used herein, thermal shock resistance refers to the ability of the coated sensing element to be heated to a temperature of about 650 °C and contacted with 1 microliter of liquid water without losing functionality and without exhibiting any thermal cracks. An applied coating 31 as described herein will tend to have its minimum thickness occur at the corners of the substrate 10, as indicated by the thickness t₁ in Fig. 2 and t₂ in Fig. 3. It has been found that it is desirable for the protective coating 31 to completely coat the periphery of a cross section taken in a plane normal to the longitudinal axis of the sensing element 10, with a minimum thickness of the protective coating 31 of about 100 microns at all locations around the periphery of the cross section. This minimum coating thickness at the corners has been demonstrated to achieve sufficient thermal shock resistance without excessive coating thickness over the flat surfaces of the sensing element 10.

The side view of a coated sensing element 10 presented in Fig. 2 shows the desired axial extent of the protective coating 31. As indicated in Fig. 2, the coating 31 preferably extends axially beyond the edge 34 of the sensor protective layer 14 where the porous protection layer 15 abuts the sensor protective layer 14. The degree to which the coating 31 extends beyond the edge 34 is denoted by the dimension "L" in Fig. 2. The dimension "L" is preferably greater than zero, and more preferably at least 1 mm.

In a further aspect of the invention, a method for making a coated sensor element is presented. The method includes dipping a portion of a fired sensor element 10 into a slurry that comprises a pulverized mineral and water, extracting the sensor element 10 from the slurry, and partially drying the dipped element 10. After allowing the slurry coated on the sensor element to partially dry, the element 10 may be dipped into the slurry a second time, extracted from the slurry, and allowed to dry completely, leaving the pulverized mineral deposited on the sensor element. The element 10 with the pulverized mineral deposited thereon is fired, using a time and temperature profile effective to sinter the pulverized mineral into a protective coating 31 so as to provide good cohesion of the protective coating 31 and good adhesion of the protective coating 31 to the sensing element 10 while avoiding cracking in the sensing element 10 and the protective coating 31.

In an embodiment of the method, the slurry further comprises a volatile solid material that is vaporized when the coated sensor element 10 is fired so as to result in controlled porosity in the protective coating 31.

In an embodiment of the method, the slurry further comprises a dispersant. In a particularly advantageous embodiment, the dispersant comprises ammonium polymethacrylate.

While the invention has been described above with reference to embodiments of the invention, the invention is not so limited. Modifications of the embodiments described above will occur to those skilled in the art, in light of the teachings above. The scope of the invention is defined with reference to the claims which follow.

## Claims

1. A sensor element comprising a substrate (10) having a coating (31) on a portion thereof, wherein the coating (31) is applied to the substrate (10) by dipping the portion of the substrate (10) into a slurry comprising a pulverized mineral and water, extracting the substrate (10) from the slurry in a direction along an axis leaving slurry material on the substrate (10), drying the dipped substrate (10), and firing the dried substrate (10) so as to promote densification of the mineral and adhesion of the mineral to the substrate (10), wherein the coating (31) after firing has a minimum thickness of about 100 microns at every location around the periphery of a cross section through the substrate (10) taken in a plane normal to the axis.

2. The sensor element according to claim 1 wherein the sensor element maintains functionality and does not exhibit any thermal cracks after being heated to about 650 °C and contacted with 1 microliter of liquid water on the coated portion while at said temperature.

3. The sensor element according to claim 1, wherein the slurry further comprises a volatile solid material, said volatile solid material being vaporized when the dried substrate (10) is fired so as to result in controlled porosity in the coating (31).

4. The sensor element according to claim 3, wherein the volatile solid material is selected from the group consisting of graphite, carbon black, starch, nylon, polystyrene, latex, other insoluble organics, and combinations of one or more of the foregoing materials.

5. The sensor element according to claim 1, wherein the slurry further comprises a dispersant.

6. The sensor element according to claim 5, wherein the dispersant comprises ammonium polymethacrylate.

7. The sensor element according to claim 1, wherein the pulverized mineral comprises alumina.

8. The sensor element according to claim 1, wherein an outer surface of the substrate (10) includes a porous protection layer (15) that abuts an edge (34) of a sensor protective layer (14), and wherein the coating (31) extends axially a sufficient amount so as to cover the edge (34) where the porous protection layer (15) abuts the sensor protective layer (14).

9. The sensor element according to claim 8, wherein the coating (31) extends axially a minimum of 1 mm. beyond the edge (34) where the porous protection layer (15) abuts the sensor protective layer (14).

10. A method for making a coated sensor element comprising the steps of:
dipping a portion of a fired sensor element into a slurry that comprises a pulverized mineral and water,
extracting the sensor element from the slurry,
drying the sensor element so as to leave the pulverized mineral deposited on the sensor element,
firing the sensor element with the pulverized mineral deposited thereon using a time and temperature profile effective to sinter the pulverized mineral into a protective coating (31) so as to provide good cohesion of the protective coating (31) and good adhesion of the protective coating (31) to the sensor element while avoiding cracking in the sensor element and the protective coating (31).

11. The method according to claim 10, wherein the slurry further comprises a volatile solid material, said volatile solid material being vaporized when the coated sensor element is fired so as to result in controlled porosity in the coating (31).

12. The method according to claim 11, wherein the volatile solid material is selected from the group consisting of graphite, carbon black, starch, nylon, polystyrene, latex, other insoluble organics, and combinations of one or more of the foregoing fugitive materials.

13. The method according to claim 10, wherein the slurry further comprises a dispersant.

14. The method according to claim 13, wherein the dispersant comprises ammonium polymethacrylate.

15. The method according to claim 10, wherein the pulverized mineral comprises alumina.
